# EUROPEAN PATENT SPECIFICATION

(11) **EP 0 229 686 B1**
(45) Date of publication and mention of the grant of the patent: **13.04.1994**
(21) Application number: 87300016.0
(22) Date of filing: 05.01.1987
(51) Int. Cl.: C07F 9/46

(54) **Preparation of organic phosphinites**
Herstellung von organischen Phosphiniten
Préparation de phosphinites organiques

(30) Priority: 06.01.1986 US 816538; 27.08.1986 US 900948
(43) Date of publication of application: 22.07.1987
(73) Proprietor: Akzo Nobel N.V., 6824 BM Arnhem (NL)
(72) Inventor: Telschow, Jeffrey Earl, Tarrytown New York 10591 (US)
(74) Representative: Kraak, Hajo

(56) References cited:
- DE-B- 1 257 153
- GB-A- 866 566
- US-A- 3 057 904

## Description

This invention relates to the preparation of organic phosphinites; more particularly, it relates to the preparation of isopropyl diphenylphosphinite (IDP).

The synthesis of phosphinites by the alcoholysis of monohalophosphines is known in the art. As is indicated in "Organic Phosphorous Compounds" by Kosolapoff and Maier, Vol. 4, p.473, the most satisfactory laboratory syntheses of phosphinites were obtained utilizing the above method. As is indicated in the article, the reaction is generally carried out in anhydrous ether of tetrahydrofuran under an inert atmosphere and at temperatures close to 0°C. Generally in the literature, the preparation of phosphinites has been conducted at temperatures close to 0°C or within the range of -10°C to +10°C as specified above. For instance, in a paper entitled "The Preparation and Reactions of Diphenylphosphinous Chloride" by Stuebe, LeSuer and Norman appearing in the Journal of the American Chemical Society, Vol. 77, pages 3526-3529 (1955), there is discussed the preparation of hexyl diphenylphosphinite wherein a solution of diphenylphosphinous chloride in naphtha was reacted with n-hexyl alcohol, in pyridine and naphtha, at a temperature of 5-10°C. The yield of the product obtained was 44%. It has previously been assumed that the phosphinic ester product is so unstable under the reaction conditions that preparation had to be conducted at temperatures close to 0°C.

More specifically, DE-A-1,257,153 relates to a production of a phosphinite by reacting a phenol and a chlorophosphine with the introduction of gaseous ammonia. Also according to US-A-3,057,904, gaseous ammonia is used to treat a reaction mixture of alcohol, trialkylamine and dialkylchlorophosphine in the preparation of esters of trivalent phosphorous acids.

It has now been unexpectedly found that the preparation of organic phosphinites in good yields may be conducted at temperatures as high as 60°C without deleterious effect on the purity of the product formed.

The present invention provides a process for the preparation and recovery of a phosphinite corresponding to the following general formula: R¹R²POR³, wherein R¹, R² and R³ independently represent alkyl, aryl, alkaryl or aralkyl containing from 1 to 30 carbon atoms; characterised in that it consists essentially of reacting a disubstituted halophosphine with an alcohol or phenol in the presence of a tertiary amine base and in the absence of gaseous ammonia at from 20 to 60°C under nitrogen or other means to remove any source of oxygen or water from the system, preferably from 45 to 55°C.

Disubstituted monohalophosphines which may be utilized in the present process comprise, for example, diethyl phosphinous chloride, diphenylphosphinous chloride and methylphenylphosphinous chloride. Diphenylphosphinous chloride (DPC) is the preferred monohalophosphine for practising the present invention.

The primary, secondary or tertiary alcohols suitable for use in practice of the present invention may comprise methanol, ethanol, isopropyl alcohol, t-butyl alcohol, phenol or generally alcohols and phenols from C₁ to C₃₀.

Tertiary amine bases that may be utilized in the present process may comprise trialkylamines, such as triethylamine, and heteroaromatic amines, such as pyridine, substituted pyridines and quinoline, for example. In the practice of the present invention it is preferable to use a tertiary amine such as triethylamine.

The present invention may in general comprise the reaction of stoichiometric amounts of the disubstituted halophosphine and the alcohol or phenol in the presence of a tertiary amine base. The alcohol or phenol may be and is preferably used in excess. For instance, up to 2 equivalents of alcohol is desirable while 1.2 equivalents or 20% over stoichiometry is preferable. The amount of base utilized in the practice of the present invention may range from 1.0 (stoichiometry) to about 2.0 equivalents, preferably from about 1.0 to about 1.2 equivalents.

The reaction is generally conducted from about ambient temperature (25°C) to about 60°C with stirring under nitrogen or other means to remove any source of oxygen or water from the system (which is oxidatively and hydrolytically unstable). A temperature for the reaction of from 45 to 55°C is preferred to obtain a product of increased purity. The reaction mixture obtained is generally in the form of thick slurry which is filtered or otherwise separated from the solvents to obtain the product. For recovery of the product, it is possible to concentrate the filtrate, such as by evaporation under reduced pressure.

The following Examples illustrate the present invention.

In the Examples, the DPC had the following assay (P³¹NMR) depending on the source, plant or distilled: plant 93.7%; distilled 96.9%.

### Example 1

A 100 ml 3-necked flask fitted with a 25 ml dropping funnel, mechanical stirrer and pot thermometer was charged with 8.1 ml (6.3 g, 0.105 mole) of isopropyl alcohol, 14.7 ml (10.6 g, 0.105 mole) of triethylamine, and 60 ml of hexane. To this stirred solution under N₂ was added dropwise 18.0 ml (22.0 g, 0.10 mole) of distilled diphenylphosphinous chloride (DPC). The reaction temperature was allowed to reach 55°C and then was maintained at 55°C ± 5°C for the remainder (under these conditions generally from about 20 to 50 minutes, depending on the efficiency of the cooling) of the addition by means of a cold water bath.

The resulting thick slurry was stirred at ambient temperature (23°C-55°C) for one hour after the DPC addition. The mixture was filtered, the solid was washed with 50 ml hexane, and the clear filtrate was concentrated under reduced pressure to leave 17.5 g (71.7% yield based on the amount of DPC used) of yellow isopropyl diphenylphosphinite having a 95.6% purity.

### Examples 2-4

The procedure of Example 1, above, was repeated three times using the same quantities of reactants specified therein. The reactions were, however, conducted at a temperature of 25°C for 1 hour and for 20 hours. The results are as shown. The assay was in mole % by P³¹NMR.

| Conditions Crude Yield* DPC Source P Species | 25°, 1hr 77.9% Dist. | 25°, 1hr 82.4% Plant | 25°, 20hr 68.9% Dist. |
|---|---|---|---|
| (C₆H₅)₂POCH(CH₃)₂ | 85.5 | 86.1 | 87.7 |
| (C₆H₅)₂P(O)OCH(CH₃)₂ | 5.9 | 5.2 | 2.8 |
| (C₆H₅)₂P(O)H | 1.7 | 2.1 | 1.6 |
| (C₆H₅)₂PCl | N.D. | N.D. | N.D. |
| P(OR)₃ | 5.2 | 3.8 | 5.1 |
| Other | 1.6 | 2.5 | 2.7 |

| | | | |
|---|---|---|---|
| * Yield is based on assumption of 100% purity for both DPC and IDP. | | | |

## Claims

1. A process for the preparation and recovery of a phosphinite corresponding to the following general formula:
R¹R²POR³, wherein R¹, R² and R³ independently represent alkyl, aryl, alkaryl or aralkyl containing from 1 to 30 carbon atoms; characterised in that it consists essentially of reacting a disubstituted halophosphine with an alcohol or phenol in the presence of a tertiary amine base and in the absence of gaseous ammonia at from 20 to 60°C under nitrogen or other means to remove any source of oxygen or water from the system.

2. A process as claimed in claim 1 wherein the disubstituted halphosphine is diphenylphosphinous chloride.

3. A process as claimed in claim 1 or claim 2 wherein the alcohol is isopropyl alcohol.

4. A process as claimed in any of claims 1 to 3 wherein the tertiary amine is triethylamine.

5. A process as claimed in any of claims 1 to 4 wherein the temperature is from 45 to 55°C.

## Patentansprüche

1. Verfahren zur Herstellung und Gewinnung eines Phosphinits entsprechend der folgenden allgemeinen Formel:
R¹R²POR³
in der R¹, R² und R³ unabhängig Alkyl, Aryl, Alkaryl oder Aralkyl enthaltend von 1 bis 30 Kohlenstoffatome darstellen, dadurch gekennzeichnet, dass es im wesentlichen aus der Umsetzung eines disubstituierten Halogenphosphins mit einem Alkohol oder Phenol in Gegenwart einer tertiären Aminbase und in Abwesenheit von gasförmigem Ammoniak bei 20 bis 60°C unter Stickstoff oder anderen Mitteln zur Entfernung jedwelcher Quellen für Sauerstoff oder Wasser aus dem System besteht.

2. Verfahren nach Anspruch 1, bei dem das disubstituierte Halogenphosphin das Diphenylphosphinochlorid ist.

3. Verfahren nach Anspruch 1 oder 2, bei dem der Alkohol Isopropylalkohol ist.

4. Verfahren nach einem der Ansprüche 1 bis 3, bei dem das tertiäre Amin Triethylamin ist.

5. Verfahren nach einem der Ansprüche 1 bis 4, bei dem die Temperatur 45 bis 55°C beträgt.

## Revendications

1. Procédé pour la préparation et la récupération d'un phosphinite correspondant à la formule générale suivante:
R¹R²POR³
dans laquelle R¹, R² et R³ représentent indépendamment un groupe alkyle, aryle, alkylaryle ou arylalkyle contenant 1 à 30 atomes de carbone, caractérisé en ce qu'il consiste essentiellement à faire réagir une halogénophosphine disubstituée avec un alcool ou un phénol en présence d'une base constituée par une amine tertiaire et en l'absence d'ammoniac gazeux, à une température de 20 à 60°C sous azote, ou dans un autre milieu, pour retirer toute source d'oxygène ou d'eau du système.

2. Procédé selon la revendication 1, dans lequel l'halogénophosphine disubstituée est le chlorure diphénylphosphineux.

3. Procédé selon la revendication 1 ou la revendication 2, dans lequel l'alcool est l'alcool isopropylique.

4. Procédé selon l'une quelconque des revendications 1 à 3, dans lequel l'amine tertiaire est la triéthylamine.

5. Procédé selon l'une quelconque des revendications 1 à 4, dans lequel la température est comprise entre 45 et 55°C.
